# EUROPÄISCHE PATENTANMELDUNG

(11) **EP 3 603 810 A1**
(43) Veröffentlichungstag der Anmeldung: **05.02.2020**
(21) Anmeldenummer: 19188239.8
(22) Anmeldetag: 25.07.2019
(51) Int. Cl.: B01L 7/02, B01L 9/06, B01L 3/00, B01F 3/04, C12M 1/06

(54) **DRUCKBEHÄLTER MIT MAGNETSCHEIBE ZUM RÜHREN**

(30) Priorität: 02.08.2018 DE 202018104457 U
(71) Anmelder: MWT AG, 9435 Heerbrugg (CH)
(72) Erfinder: Lautenschläger, Werner, 9435 Heerbrugg (CH); Lautenschläger, Jens, 9435 Heerbrugg (CH); Scholze, Werner, 88316 Isny (DE)
(74) Vertreter: Kiwit, Benedikt

(57) **Zusammenfassung**

Die vorliegenden Erfindung betrifft einen Druckbehälter (1) zur Aufnahme von zu beheizenden Proben (P), aufweisend eine Reaktionskammer (2) als Druckraum zum Auslösen und/oder Fördern chemischer und/oder physikalischer Druckreaktionen, wobei die Reaktionskammer (2) zur Aufnahme einer Flüssigkeit (5) ausgebildet ist, eine um eine Rotationsachse drehbar in der Reaktionskammer (2) gelagerte Magnetscheibe (8), und eine außerhalb der Reaktionskammer (2) vorgesehene Magnetanordnung (10) zur Erzeugung eines sich rotierenden Magnetfeldes zum rotatorischen Antrieb der Magnetscheibe (8) um ihre Rotationsachse, wobei die Magnetscheibe (8) wenigstens eine sich quer zur Rotationsachse erstreckende Durchgangsbohrung (13) aufweist, welche derart vorgesehen ist, dass in der Reaktionskammer (2) aufgenommene Flüssigkeit (5) durch Rotation der Magnetscheibe (8) durch die Durchgangsöffnung (13) getrieben wird, um die Flüssigkeit (5) zu rühren.

## Beschreibung

Die Erfindung betrifft einen Druckbehälter zur Aufnahme von zu beheizenden Proben, aufweisend eine Reaktionskammer als Druckraum zum Auslösen und/oder Fördern chemischer und/oder physikalischer Druckreaktionen.

Druckbehälter der eingangs genannten Art sind aus dem Stand der Technik bekannt. Um die in dem Druckbehälter aufgenommenen Proben zu beheizen, werden in der Regel Mikrowellen in die Reaktionskammer des Druckbehälters eingekoppelt. Zudem kann vorgesehen sein, dass die so in dem Druckbehälter aufgenommenen Proben über eine in der Reaktionskammer aufgenommene Flüssigkeit indirekt erhitzt werden. Die Effizienz des Beheizens der Proben hängt somit zu einem großen Teil auch von dem Zustand der Flüssigkeit ab. Es wurde dabei insbesondere erkannt, dass der Prozess des Beheizens der Proben über die Flüssigkeit verhältnismäßig langsam bzw. ineffizient ist.

Es ist somit eine Aufgabe der Erfindung, einen Druckbehälter der eingangs genannten Art bereitzustellen, mit dem Proben effizienter beheizt werden können.

Die Aufgabe wird erfindungsgemäß durch die Merkmale des unabhängigen Anspruchs gelöst. Vorteilhafte Weiterbildungen sind Gegenstand der hierauf rückbezogenen Unteransprüche.

Ein erfindungsgemäßer Druckbehälter zur Aufnahme von zu beheizenden Proben weist auf: eine Reaktionskammer als Druckraum zum Auslösen und/oder Fördern chemischer und/oder physikalischer Druckreaktionen, wobei die Reaktionskammer zur Aufnahme einer Flüssigkeit ausgebildet ist; eine um eine Rotationsachse drehbar in der Reaktionskammer gelagerte Magnetscheibe; und eine außerhalb der Reaktionskammer vorgesehene Magnetanordnung zur Erzeugung eines sich rotierenden Magnetfeldes zum rotatorischen Antrieb der Magnetscheibe um ihre Rotationsachse. Die Magnetscheibe weist wenigstens eine sich quer zur Rotationsachse erstreckende Durchgangsbohrung auf, welche derart vorgesehen ist, dass in der Reaktionskammer aufgenommene Flüssigkeit durch Rotation der Magnetscheibe durch die Durchgangsöffnung getrieben wird, um die Flüssigkeit zu rühren.

Mit anderen Worten wird insbesondere durch die Durchgangsbohrung, welche die rotierende Magnetscheibe quer zur Rotationsachse durchläuft, ein Druckunterschied zwischen den Öffnungen der Durchgangsbohrung bewirkt. Wegen dieses Druckunterschieds wird folglich die in der Reaktionskammer aufgenommene Flüssigkeit durch die Durchgangsöffnung getrieben, sodass die Flüssigkeit gerührt bzw. verwirbelt wird (auch bekannt als Propellerwirkung). Auf diese Weise kann ein effizienteres Rühren, insbesondere eine homogenere Durchmischung, und folglich ein effizienteres Beheizen der in der Reaktionskammer aufgenommenen Flüssigkeit und Proben bezweckt werden. Auf diese Weise wird auch eine gleichmäßigere Temperaturverteilung in der Flüssigkeit bzw. den Proben erzielt. Außerdem kann eine solche Magnetscheibe bzw. Rührungsvorrichtung einfach hergestellt werden, nämlich indem einfach eine sich quer zur Rotationsachse erstreckende Durchgangsbohrungen durch die Magnetscheibe gebohrt wird. Aufgrund der einfachen Geometrie der Magnetscheibe wird zudem ein Rührmittel mit einer geringen Unwucht bereitgestellt.

Vorzugsweise durchläuft die wenigstens eine Durchgangsbohrung die Magnetscheibe wenigstens zum Teil in eine Richtung nach oben und von der Rotationsachse weg oder zu der Rotationsachse hin. Somit kann die Durchgangsbohrung einfach in der Magnetscheibe vorgesehen werden. Außerdem kann somit die Flüssigkeit die Durchgangsbohrung ohne darin vorgesehene Krümmungen durchlaufen, sodass die Flüssigkeit die Durchgangsbohrung schnell durchläuft. Dies wirkt sich wiederum positiv auf den Rühreffekt der Magnetscheibe aus.

Die wenigstens eine Durchgangsbohrung kann die Magnetscheibe wenigstens zum Teil in eine Richtung tangential zur oder entgegen der Drehrichtung um die Rotationsachse geneigt durchlaufen. Mit anderen Worten kann die Erstreckung der Durchgangsbohrung eine Erstreckungskomponente aufweisen, welche in Richtung der Rotationsachse der Magnetscheibe gesehen tangential zu einem imaginären Kreis ist, der durch Drehung der Magnetscheibe gezogen wird. Folglich kann durch die Drehung der Magnetscheibe bzw. durch das Drehmoment der Magnetscheibe, das auf die in der Durchgangsbohrung vorgesehene Flüssigkeit wirkt, Flüssigkeit durch die Durchgangsbohrung getrieben werden. Außerdem kann somit durch Drehrichtungsänderung der Magnetscheibe die Richtung des Durchflusses der Flüssigkeit durch die Durchgangsbohrung geändert werden.

Die wenigstens eine Durchgangsbohrung kann die Magnetscheibe wenigstens zum Teil in eine Richtung radial zur Rotationsachse hin oder von dieser weg geneigt durchlaufen. Mit anderen Worten kann die Erstreckung der Durchgangsbohrung eine (weitere) Erstreckungskomponente aufweisen, welche in Richtung der Rotationsachse der Magnetscheibe gesehen in Richtung oder entgegen des Radius eines (oder des) imaginären, durch Drehung der Magnetscheibe gezogenen Kreises verläuft. Die Durchgangsbohrung weist also dann zwei auf der Magnetscheibe vorgesehene Öffnungen auf, wobei eine der Öffnungen näher an der Rotationsachse der Magnetscheibe angeordnet ist als die andere der Öffnungen. Durch Rotation der Magnetscheibe wird somit an der näher an der Rotationsachse angeordneten Öffnung ein Druck bewirkt, welcher von dem Druck, welcher an der weiter von der Rotationsachse entfernten Öffnung herrscht, unterschiedlich, also insbesondere höher ist. Das heißt, durch die durch Drehung der Magnetscheibe bewirkte Zentrifugalkraft, die auf die in der Durchgangsbohrung vorgesehene Flüssigkeit wirkt, kann Flüssigkeit durch die Durchgangsbohrung getrieben werden.

Vorteilhafterweise weist die Magnetscheibe wenigstens zwei, vorzugsweise drei, besonders bevorzugt vier Durchgangsbohrungen auf. Somit kann der vorgenannte Rühreffekt noch weiter verstärkt werden. Bevorzugt ist, wenn die wenigstens zwei Durchgangsbohrungen um die Rotationsachse der Magnetscheibe gleichmäßig verteilt sind. Somit wird insbesondere eine gleichmäßige Rührung und somit ein gleichmäßiges Erwärmen der Flüssigkeit bewirkt.

Der Druckbehälter kann ferner eine Platte aufweisen, welche in der Reaktionskammer vorgesehen und für die Flüssigkeit durchlässig ist, wobei die Platte mit der Reaktionskammer einen Raum definiert, in welchem die Magnetscheibe gelagert ist. Die Durchlässigkeit der Platte für die Flüssigkeit kann beispielsweise über in der Magnetscheibe vorgesehene Löcher erfolgen. Es ergibt sich somit eine einfache Lagerung für die Magnetscheibe, welche insbesondere ohne weitere von der Magnetscheibe separat bereitgestellte Lagerungsmittel vorgesehen werden kann.

Vorzugsweise ist die Platte aus einem keramischen Material hergestellt, welches vorzugsweise Siliciumcarbid (SiC) aufweist. Diese Materialien sind insbesondere formstabil, chemikalienbeständig und temperaturbeständig und eignen sich daher in besonders vorteilhafter Weise für die in dem Druckbehälter ablaufenden Reaktionen. Vorgenannte Materialien zeichnen sich zudem durch ihre Fähigkeit aus, stark absorbierend für Mikrowellen zu sein. Ist die Platte also wie die Magnetscheibe in der Flüssigkeit vorgesehen, so wird die Platte durch Mikrowellenabsorption erhitzt und gibt folglich Wärme an die die Platte umgebende Flüssigkeit ab. Somit wird die Flüssigkeit besonders schnell und effizient erhitzt. Außerdem wird somit eine homogenere Temperaturverteilung in der Flüssigkeit eingstellt. Und da die Platte zudem zur Lagerung der Magnetscheibe vorgesehen ist, kann mit nur einer Platte sowohl ein Erhitzen der Flüssigkeit als auch eine Lagerung der Magnetscheibe erfolgen, wodurch die Effizienz des Beheizens erhöht und die Anzahl der hierfür notwendigen Bauteile reduziert ist.

Die Reaktionskammer und/oder die Platte können einen Bereich zur Lagerung der Magnetscheibe aufweisen. Zur Reduzierung der notwendigen Bauteile zur Lagerung der Magnetscheibe kann dieser Bereich insbesondere integral auf dem jeweiligen Teil vorgesehen sein. Somit wird die Magnetscheibe relativ zur Reaktionskammer und/oder der Platte in einer definierten Position gehalten, und zwar ohne zusätzliche, separat bereitgestellte Mittel.

Der Druckbehälter kann ferner wenigstens einen Probenbehälter zur Aufnahme einer Probe aufweisen, wobei der Probenbehälter in der Reaktionskammer gehalten wird, um von der in der Reaktionskammer aufgenommenen Flüssigkeit erwärmt zu werden, wenn die Flüssigkeit in der Reaktionskammer aufgenommen ist. Der wenigstens eine Probenbehälter befindet sich dann vorzugsweise in der Flüssigkeit, um von dieser beheizt zu werden. Der Probenbehälter, beispielsweise ein Reagenzglas, kann somit außerhalb von dem Druckbehälter mit der zur untersuchenden Probe befüllt und anschließend einfach in die Reaktionskammer gesetzt werden.

Der wenigstens eine Probenbehälter weist vorzugsweise einen Rührmagneten zum Rühren einer in dem Probenbehälter aufgenommen Probe auf. Der Rührmagnet ist dabei bezüglich der Magnetscheibe derart vorgesehen, dass durch das rotierende Magnetfeld und/oder durch das wegen Rotation der Magnetscheibe sich ergebende rotierende Magnetfeld der Rührmagnet zum Rühren der Probe in Bewegung versetzt wird. Das heißt, die sich rotierenden Magnetfelder der Magnetanordung und/oder der Magnetscheibe bewegen bzw. rotieren sich relativ zu dem Rührmagneten, wodurch der Rührmagnet in Bewegung bzw. Rotation versetzt wird. Folglich können das rotierende Magnetfeld und/oder das wegen Rotation der Magnetscheibe sich ergebende rotierende Magnetfeld gleichzeitig zum Rühren des Rührmagneten benutzt werden. Zusätzliche Mittel zum Bewegen des Rührmagneten können somit entfallen.

Vorzugsweise ist der wenigstens eine Probenbehälter über eine Probenhalterung in der Reaktionskammer gehalten. Über die Probenhalterung wird der wenigstens eine Probenbehälter somit sicher und in einer definierten Position in der Reaktionskammer gehalten. Außerdem kann der Probenbehälter mittels der Probenhalterung einfach aus dem Druckbehälter entnommen werden. Bevorzugt ist, wenn die Probenhalterung auf einem Bereich der Platte zur Lagerung der Probenhalterung gelagert ist. Weitere Mittel zur sicheren und definierten Lagerung der Probenhalterung können somit entfallen.

Vorteilhafterweise weist die Magnetanordnung einen oder mehrere, vorzugsweise über den Umfang bevorzugt gleichmäßig verteilt angeordnete Elektromagneten, vorzugsweise Magnetspulen, auf. Hierdurch kann besonders einfach, nämlich durch entsprechende Ansteuerung des oder der Elektromagneten, das sich rotierende Magnetfeld erzeugt werden. Ist der Elektromagnet zudem als Magnetspule ausgebildet, kann der Elektromagnet besonderes flexibel bezüglich des Druckbehälters und insbesondere bezüglich der Magnetscheibe vorgesehen werden.

Vorzugsweise ist der Elektromagnet (schräg) oberhalb, seitlich neben oder (schräg) unterhalb der Magnetscheibe, besonders bevorzugt im, am oder nahe dem Druckbehälterboden oder der Druckbehälterwandung, vorgesehen. In einer derartigen Position ist der Elektromagnet für dessen Montage mit dem Druckbehälter gut zugänglich. Außerdem reduziert sich somit die Baubreite des Druckbehälters. Zudem kann somit das rotierende Magnetfeld gut auf die Magnetscheibe wirken.

Der Elektromagnet kann in einer in der Druckbehälterwandung vorgesehenen und sich in Richtung der Magnetscheibe erstreckenden Bohrung vorgesehen sein. Somit kann der Elektromagnet einfach in Verbindung mit dem Druckbehälter gebracht werden. Außerdem kann der Elektromagnet dadurch noch näher an die Magnetscheibe gebracht werden, sodass die magnetische Wirkung auf die Magnetscheibe und somit die Rotation der Magnetscheibe verbessert ist. Die Bohrung ist dabei klein genug ausgeführt, um keinen Einfluss auf die druckaufnehmende Druckbehälterwandung zu haben.

Vorzugsweise ist der Elektromagnet in die Bohrung einschraubbar. Mit anderen Worten kann der Elektromagnet wenigstens teilweise als Schraube ausgeführt sein, um in die mit einem Gewinde vorgesehene Bohrung eingeschraubt zu werden. Somit kann der Elektromagnet einfach mit dem Druckbehälter in Verbindung gebracht, insbesondere befestigt werden. Außerdem kann der Elektromagnet dadurch in einfacher Weise ausgetauscht werden. Zudem kann durch die Schraubbewegung des Elektromagneten der Abstand zu der Magnetscheibe einfach variiert werden, sodass beispielsweise eine stärkere oder geringere Magnetwirkung mit Bezug zur Magnetscheibe eingestellt werden kann.

Die Magnetanordnung kann wenigstens einen drehbar, insbesondere um die Magnetscheibe herum drehbar vorgesehenen Permanentmagneten aufweisen, sodass durch die Drehung des Permanentmagneten das sich rotierende Magnetfeld zum rotatorischen Antrieb der Magnetscheibe erzeugt wird. So kann einfach, insbesondere ohne Ansteuerung von Elektromagneten, das sich rotierende Magnetfeld erzeugt werden. Zudem kann der wenigstens eine Permanentmagnet einfach ausgetauscht und gewartet werden.

Die Magnetanordnung kann eine Permanentmagnetenaufnahme vorzugsweise in Form eines Ringes aufweisen, in welcher der wenigstens eine Permanentmagnet zum Drehen bzw. Rotieren des wenigstens einen Permanentmagneten aufgenommen ist. Über die Permanentmagnetenaufnahme kann der wenigstens eine Permanentmagnet beispielsweise einfach von außerhalb des Druckbehälters in der Magnetanordnung vorgesehen werden. Bevorzugt ist, wenn die Permanentmagnetenaufnahme mehrere Permanentmagnete aufnimmt/aufweist, welche bevorzugt über den Umfang der Permanentmagnetenaufnahme gleichmäßig verteilt angeordnet sind; besonders bevorzugt je Pol bzw. Polung einander gegenüberliegend bzw. in einander gegenüberliegenden Kreissektoren und über einen Winkel von jeweils 120-180°, vorzugsweise 160-180° verteilt angeordnet sind. Somit kann sich die Magnetscheibe durch Drehung der Permanentmagnetenaufnahme gleichmäßig drehen.

Die Magnetanordnung kann einen Antrieb zum Antreiben des wenigstens einen Permanentmagneten bzw. der Permanentmagnetenanordnung aufweisen, sodass sich der oder die Permanentmagnete derart rotieren/drehen, um das sich rotierende Magnetfeld zu erzeugen.

Vorzugsweise weist die Magnetscheibe wenigstens zwei, vorzugsweise drei, besonders bevorzugt vier magnetische Elemente zur Magnetisierung der Magnetscheibe auf. Somit kann eine besonders gleichförmige Rotation der Magnetscheibe bewirkt werden. Bevorzugt ist, wenn die wenigstens zwei magnetischen Elemente um die Rotationsachse der Magnetscheibe gleichmäßig verteilt sind. Dies kommt wiederum einer gleichmäßigen Rotation der Magnetscheibe zugute.

Vorzugsweise ist in Draufsicht bzw. Schnittansicht der Magnetscheibe gesehen zwischen zwei magnetischen Elementen eine der wenigstens einen Durchgangsbohrung vorgesehen. Somit kann wird verhindert, dass die Durchgangsbohrung die magnetischen Elemente bzw. die Magnetisierung der Magnetscheibe beeinflusst. Zudem kann die Magnetscheibe somit bei gleichbleibender Magnetisierung gewichtsreduziert ausgeführt werden.

Vorzugsweise sind die wenigstens zwei magnetischen Elemente jeweils eine Magnetsäule. Somit können die magnetischen Elemente einfach hergestellt, und einfach in der Magnetscheibe vorgesehen werden. Insbesondere kann somitdie Magnetsäule einfach in die Magnetscheibe eingesteckt oder in diese eingebettet werden.

Der Druckbehälter kann ferner einen Mikrowellengenerator aufweisen, welcher derart vorgesehen ist, dass vom Mikrowellengenerator generierte Mikrowellen wenigstens über das von dem Elektromagneten erzeugte Magnetfeld in die Reaktionskammer eingekoppelt werden. Das Magnetfeld wechselwirkt somit mit den Mikrowellen, um beispielsweise die Mikrowellen gleichmäßig in die Reaktionskammer und somit gleichmäßig in die zu beheizende Flüssigkeit einzukoppeln. Außerdem ergibt sich dadurch ein besonders kompakter Druckbehälter, da der Mikrowellengenerator somit in der Nähe des Elektromagneten vorgesehen werden kann.

Nachfolgend wird die Erfindung anhand der Zeichnungen, in denen vorteilhafte Ausführungsbeispiele der Erfindung dargestellt sind, beispielhaft beschrieben. In den Zeichnungen zeigen:
- Figur 1: eine schematische Schnittansicht eines Ausführungsbeispiels des erfindungsgemäßen Druckbehälters;
- Figur 2: eine Detailansicht eines Ausschnitts des in Figur 1 gezeigten Druckbehälters;
- Figur 3: eine schematische Schnittansicht des in den Figuren 1 und 2 gezeigte Druckbehälters entlang der Schnittlinie SE1;
- Figur 4: eine schematische Schnittansicht eines weiteren Ausführungsbeispiels des erfindungsgemäßen Druckbehälters;
- Figur 5: eine schematische Schnittansicht des in der Figur 4 gezeigten Druckbehälters entlang der Schnittlinie SE2;
- Figur 6: eine schematische Ansicht einer weiteren Ausführungsform der Probenhalterung.

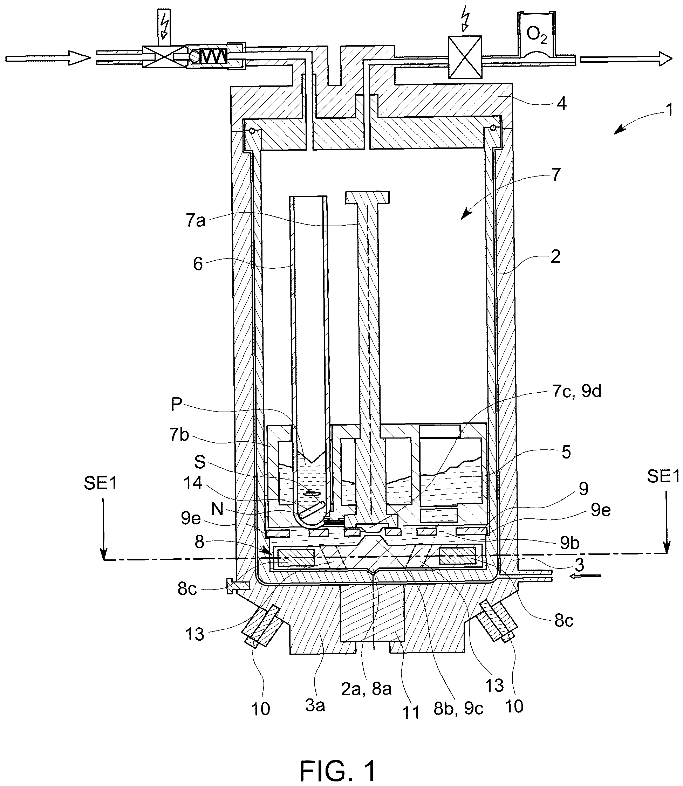

Figur 1 zeigt eine beispielhafte Ausführungsform eines erfindungsgemäßen Druckbehälters 1 zur Aufnahme von zu beheizenden Proben P zum Auslösen und/oder Fördern chemischer und/oder physikalischer Druckreaktionen an den Proben P. Die Probe P kann beispielsweise Feststoffe wie Sand, Boden, Erde und/oder Blätter aufweisen. Der Druckbehälter 1 ist jedoch nicht auf eine bestimmte Probe P beschränkt. Insbesondere können im Druckbehälter 1 jede Art von Proben einer Druckreaktion und Beheizung unterzogen werden, vor allem Proben mit hoher Viskosität bzw. vielen Feststoffanteilen.

Der Druckbehälter 1 kann ein (Hochdruck-)Autoklav sein. Der Druckbehälter 1 besteht vorzugsweise aus einem hochdruckfesten Werkstoff wie beispielsweise Metall, vorzugsweise Stahl, besonders vorzugsweise eine korrosionsbeständige Edelstahl-Legierung. Der Druckbehälter 1 ist dabei vorzugsweise derart ausgebildet, dass er bei Drücken bis zu wenigstens 200 Bar, vorzugsweise bis zu wenigstens 500 Bar, sowie bei Temperaturen von bis zu und auch über 300°C einsetzbar ist.

Der Druckbehälter 1 weist ferner eine Reaktionskammer bzw. einen Druckraum 2 zum Auslösen und/oder Fördern der chemischen und/oder physikalischen Druckreaktionen an den Proben P auf. Erkennbar ist, dass der Druckbehälter 1 die Reaktionskammer 2 umgibt, und zwar vorzugsweise an allen Seiten. Die Probe bzw. Proben P ist zur Probenbehandlung in der Reaktionskammer 2 angeordnet und aus dieser vorzugsweise durch eine Öffnung entnehmbar.

Der Druckbehälter 1 weist vorzugsweise ein (topfförmiges) Unterteil 3 und ein Deckelteil 4 auf, die miteinander verschließbar sind und im geschlossenen Zustand die Reaktionskammer 2 allseitig umgeben. Dabei verschließt der Deckel 4 die in dem Druckbehälter 1, also dem Unterteil 3 des Druckbehälters 1, vorgesehene Öffnung zum Einbringen und Entnehmen der Probe P. Mittels des Deckels 4 kann der Druckbehälter 1 und/oder die Reaktionskammer 2 folglich geöffnet und geschlossen werden.

Wie insbesondere die Figur 1 erkennen lässt, ist die Reaktionskammer 2 ferner ausgebildet, eine Flüssigkeit bzw. Grundlast 5 aufzunehmen. Die Flüssigkeit 5 ist vorzugsweise Wasser, kann aber auch jegliche andere stark mikrowellenabsorbierende Flüssigkeit sein oder aufweisen. Die Flüssigkeit 5 ist dabei insbesondere vorgesehen, um die in dem Druckbehälter 1 bzw. in der Reaktionskammer 2 befindliche Probe P zu beheizen bzw. zu erwärmen. Dies kann beispielsweise erfolgen, indem die Probe P von der Flüssigkeit 5 wenigstens teilweise umgeben ist, und ein nicht näher dargestellter Mikrowellengenerator die Flüssigkeit 5 durch Mikrowellenabsorption erwärmt.

Die Probe P kann in einem Probenbehälter 6 wie beispielsweise einem Reagenzglas vorgesehen sein. Die Probe P ist in dem Druckbehälter vorzugsweise derart vorgesehen, dass die Flüssigkeit 5 wenigstens bis zu einem Teil der Höhe der Probe P reicht. Es kann jedoch auch vorgesehen sein, dass die Flüssigkeit 5 über die Höhe der Probe P reicht. Vorzugsweise ist der Druckbehälter 1 bzw. die Reaktionskammer 2 ausgebildet zwei oder mehr Proben P aufzunehmen. In entsprechender Weise können auch mehrere Probenbehälter 6 vorgesehen sein, also wenigstens ein Probenbehälter 6, um jeweils eine Probe P aufzunehmen.

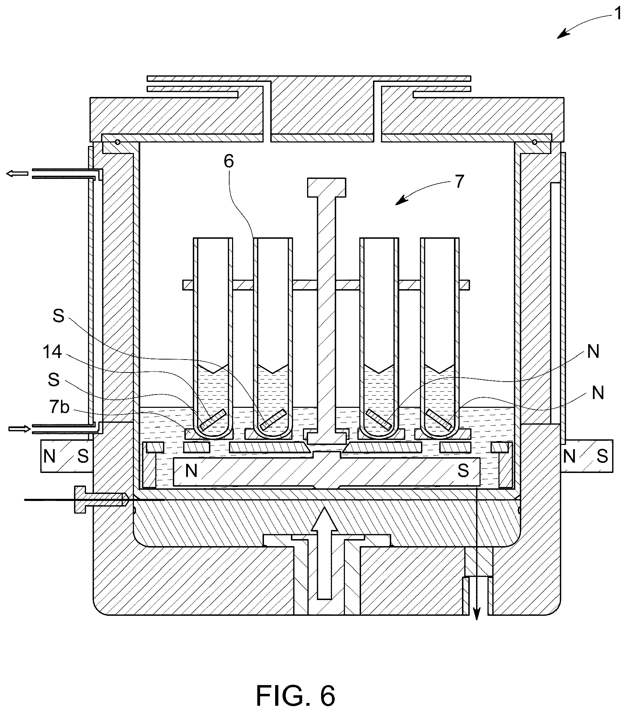

Der Druckbehälter 1 kann ferner eine Probenhalterung 7 aufweisen, mit welcher der Probenbehälter 6 in der Reaktionskammer 2 gehalten werden kann. Die Probenhalterung 7 trägt den wenigstens einen Probenbehälter 6 vorzugsweise derart trägt, dass der Probenbehälter 6 sich in der Flüssigkeit 5 befindet. Die Probenhalterung 7 ist insbesondere dazu ausgebildet, um beispielsweise über einen Griff 7a die wenigstens eine Probe P bzw. den wenigstens einen Probebehälter 6 in die Reaktionskammer 2 zu geben und aus dieser wieder zu entnehmen. Die Probenhalterung 7 kann ferner einen Probenbehälteraufnahmebereich 7b aufweisen, welcher vorzugsweise korrespondierend zu dem Probenbehälter 6 ausgebildet ist. Der Probenbehälteraufnahmebereich 7b kann mehrere Bereiche aufweisen, um mit einem jeweiligen Bereich einen Probenbehälter 6 aufzunehmen. Der Probenbehälteraufnahmebereich 7b bewirkt dabei insbesondere, dass die Probenbehälter 6 in einem bestimmten Muster vorgesehen sind, also beispielsweise in Kreisform um den Griff 7a herum angeordnet sind. Wie in Figur 1 erkennbar, können die Probenbehälter beispielsweise auf einem einzigen Kreis um den Griff 7a herum angeordnet sein. Wie in Figur 6 erkennbar, kann die Probenhalterung 7 mehrere Probenbehälter 6 auch auf unterschiedlichen Radien bzw. Kreisen um den Griff 7a herum aufnehmen. Der Probenbehälteraufnahmebereich 7b kann insbesondere korrespondierend zur Innenwand der Reaktionskammer 2 ausgebildet sein, um somit die Probenhalterung 7 in der Reaktionskammer 2 definiert zu halten.

Der Druckbehälter 1 weist ferner eine um eine Rotationsachse drehbar in der Reaktionskammer 2 gelagerte Magnetscheibe 8 auf. Die Magnetscheibe 8 weist eine für eine Scheibe typische Form auf, also insbesondere eine flache und/oder (kreis-)runde Form. Die Magnetscheibe 8 ist in der Reaktionskammer 2 derart vorgesehen, dass - wenn die Flüssigkeit 5 in der Reaktionskammer 2 vorhanden ist -die Magnetscheibe 8 in der Flüssigkeit 5 vorgesehen ist. Insbesondere kann die Magnetscheibe 8 in einem unteren Bereich der Reaktionskammer 2, vorzugsweise auf dem Boden der Reaktionskammer 2, vorgesehen sein. Vorzugsweise erstreckt sich die Magnetscheibe 8 im Wesentlichen über die gesamte Bodenfläche der Reaktionskammer 2 und lässt somit nur einen kleinen Spalt zwischen Magnetscheibe 8 und Reaktionskammer 2. Die Reaktionskammer 2, vorzugsweise der Boden der Reaktionskammer 2, kann einen Lagerbereich 2a aufweisen, über welchen die Magnetscheibe 8 in der Reaktionskammer 2 gelagert werden kann, insbesondere derart, dass die Magnetscheibe (nur) um ihre Rotationsachse bewegbar bzw. drehbar ist. Der Lagerbereich 2a ist vorzugsweise korrespondierend zu einem an der Magnetscheibe 8 ausgebildeten Lagerbereich 8a ausgebildet. Das heißt, die Magnetscheibe 8 kann über die Lagerbereiche 2a, 8a der Reaktionskammer 2 bzw. der Magnetscheibe 8 in der Reaktionskammer 2 drehbar gelagert sein. Beispielsweise kann der Lagerbereich 2a als eine Aussparung oder Bohrung vorgesehen sein, wobei der Lagerbereich 8a der Magnetscheibe 8 in entsprechender Weise beispielsweise als Vorsprung ausgebildet ist und in diese Aussparung greift.

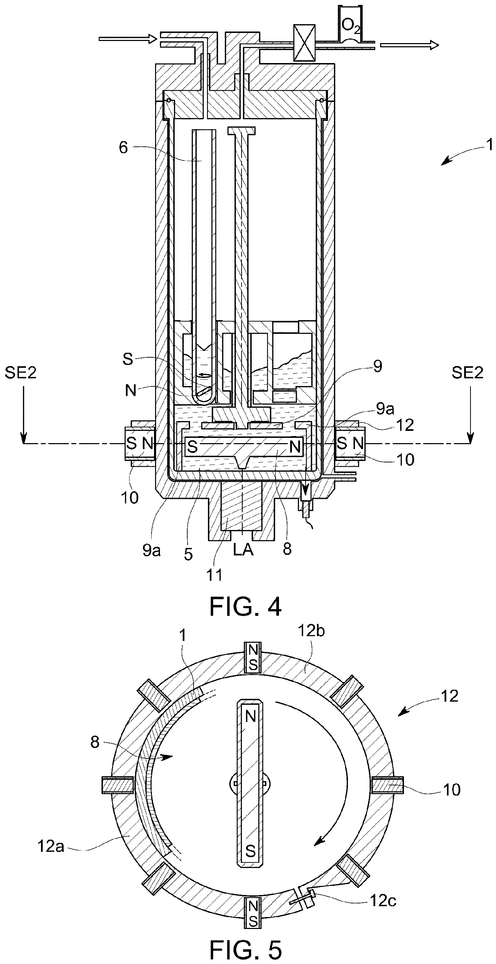

Der Druckbehälter 1 kann ferner eine Platte (Scheibe) oder ein Podest 9 aufweisen, welche in der Reaktionskammer 2 vorgesehen und für die Flüssigkeit 5 durchlässig ist. Erkennbar ist, dass die Platte 9 mit der Reaktionskammer 2, insbesondere mit dem Boden der Reaktionskammer 2, einen Raum definiert, in welchem die Magnetscheibe 8 gelagert ist. Die Platte 9 kann hierfür beispielsweise in der Reaktionskammer 2 eingelegt sein und/oder mit den Seitenwänden der Reaktionskammer 2 verbunden sein, beispielsweise indem die Platte 9 auf einem Vorsprung oder auf einer Stufe 9e der Reaktionskammer 2 aufliegt (vergleiche Figur 1). Wie in Figur 4 erkennbar, kann jedoch auch vorgesehen sein, dass sich von der Platte 9 Seitenwände 9a weg erstrecken, welche mit dem Boden der Reaktionskammer 2 verbunden sind. Das heißt, die Platte 9 kann auch mit den Seitenwänden 9a einen Käfig bilden, innerhalb dessen die Magnetscheibe 8 vorgesehen und gelagert ist.

Die in der Flüssigkeit 5 vorgesehene Platte 9 ist für die Flüssigkeit 5 durchlässig, beispielsweise über Löcher oder Durchgriffsöffnungen 9b. Die Löcher 9b sind vorzugsweise über die Oberfläche der Platte 9 gleichmäßig verteilt angeordnet. Bevorzugt ist, wenn die Platte 9 aus einem keramischen Material wie beispielsweise Siliciumcarbid hergestellt ist. Da diese Materialen stark mikrowellenabsorbierend sind, kann somit die in der Flüssigkeit 5 vorgesehene Platte 9 mittels Mikrowellenstrahlung erhitzt werden, sodass die Flüssigkeit 5 sich sowohl direkt über Mikrowellenabsorption als auch indirekt über Wärmeabgabe von der Platte 9 erhitzt.

Insbesondere in der Figur 1 ist erkennbar, dass die Platte 9 einen (weiteren) Lagerbereich 9c zur Lagerung der Magnetscheibe 8 aufweisen kann. Hierfür ist der Lagerbereich 9c vorzugsweise korrespondierend zu einem (weiteren) Lagerbereich 8d der Magnetscheibe 8 ausgebildet. Beispielsweise kann der Lagerbereich 9b der Platte 9 als Öffnung oder Aussparung ausgebildet sein, wobei der Lagerbereich 8b der Magnetscheibe 8 in entsprechender Weise beispielsweise als Vorsprung ausgebildet ist und in diese Öffnung oder Aussparung greift. Es kann auch vorgesehen sein, dass eines der Löcher 9b für den Durchfluss der Flüssigkeit 5 als Lagerbereich für die Magnetscheibe 8 dient, indem die Magnetscheibe 8 als Lagerbereich 8b einen Vorsprung aufweist, welcher ausgebildet ist, in die Öffnung 9b zu greifen, um somit um die Rotationsachse drehbar zu sein.

Die Platte 9 kann ferner einen Lagerbereich 9d zur Lagerung bzw. zum Halten der Probenhalterung 7 aufweisen. Es kann vorgesehen sein, dass der Lagerbereich 9d der Platte 9 korrespondierend zu einem Lagerbereich 7c der Probenhalterung 7 ausgebildet ist. Beispielsweise ist der Lagerbereich 9d als Öffnung oder Aussparung vorgesehen, wobei der Lagerbereich 7c in entsprechender Weise beispielsweise als Vorsprung ausgebildet ist und in die vorgenannte Öffnung oder Aussparung greift. Insbesondere kann vorgesehen sein, dass eines der Löcher 9b der Platte 9, vorzugsweise das eine der Löcher 9b zur Lagerung der Magnetscheibe 8, den Lagerbereich 9d bildet, indem der als Vorsprung ausgebildete Lagerbereich 7c in das jeweilige Loch 9b greift. Mit anderen Worten kann eines der Löcher 9b den Lagerbereich sowohl für die Probenhalterung 7 als auch für die Magnetscheibe 8 bilden. Der Lagerbereich 9d bzw. 7c bewirkt dabei insbesondere, dass die Probenhalterung in der Rektionskammer 2 in einer definierten Position und vorzugsweise unbewegbar angeordnet ist.

Der Druckbehälter 1 weist ferner wenigstens eine außerhalb der Reaktionskammer 2 vorgesehene Magnetanordnung auf, welche in dem in den Figuren gezeigten Ausführungsbeispielen beispielhaft wenigstens einen Elektromagneten 10 aufweist. Vorzugsweise weist der Druckbehälter 1, wie dargestellt, mehrere Elektromagneten 10 auf, welche um die vorgenannte Rotationsachse bzw. um den Umfang der Reaktionskammer 2 bevorzugt gleichmäßig verteilt angeordnet sind. Mittels des wenigstens einen Elektromagneten 10 wird ein sich (in einem Kreis) rotierendes Magnetfeld zum rotatorischen Antrieb der Magnetscheibe 8 um ihre Rotationsachse gebildet. Hierfür ist der wenigstens eine Elektromagnet 10 vorzugsweise entsprechend einem Stator eines Synchron- oder Schrittmotors ausgebildet. Zur Erzeugung des sich rotierenden Magnetfelds kann der Druckbehälter 1 eine nicht näher dargestellte Steuereinheit aufweisen, welche mit dem wenigstens einen Elektromagneten 10 funktional verbunden ist. Die Steuereinheit steuert die Elektromagneten 10 vorzugsweise in einer Weise, wie sie bei Synchronmotoren oder Schrittmotoren bekannt ist, also beispielsweise sinusförmig. Die Steuereinheit kann insbesondere eingerichtet sein, einen in die Elektromagneten 10 gespeisten Wechselstrom zu steuern, also insbesondere die Frequenz des Wechselstroms einzustellen. Über Einstellung der Frequenz des Wechselstroms kann somit die Drehzahl des Magnetfelds und folglich die Drehzahl der Magnetscheibe verändert/variiert werden.

Der Elektromagnet 10 ist vorzugsweise eine Magnet- oder Feldspule und/oder als Feldspulenring ausgebildet. Der Elektromagnet 10 kann jedoch auch jegliches andere Element zur Erzeugung eines Magnetfeldes bzw. eines sich rotierenden Magnetfeldes sein. Vorzugsweise ist der Elektromagnet 10 aus einem ferromagnetischen Material hergestellt. Vorzugsweise ist der Elektromagnet 10 fest oder wiederverbindbar mit der Außenwand des Druckbehälter 1 verbunden. Wie in Figur 1 erkennbar, ist der Elektromagnet 10 vorzugsweise (schräg) unterhalb der Magnetscheibe 8 vorgesehen. Hierfür kann insbesondere vorgesehen sein, dass der Elektromagnet 10 im Gehäuseunterteil 3, vorzugsweise im Druckbehälterboden 3a, vorgesehen ist. Erkennbar ist insbesondere, dass der Elektromagnet 10 neben der (druckfesten) Mikrowelleneinkopplung 11 vorgesehen sein kann. Durch Vorsehen des Elektromagneten 10 (schräg) unterhalb der Magnetscheibe 8 wird insbesondere bezweckt, dass der Elektromagnet 10 von unterhalb des Druckbehälters 1 gut zugänglich ist, um beispielsweise den Elektromagneten 10 einfach zu montieren. Grundsätzlich kann der Elektromagnet auch an einer anderen Position, bspw. seitlich der Magnetscheibe 8 oder auch (schräg) oberhalb derselben vorgesehen sein.

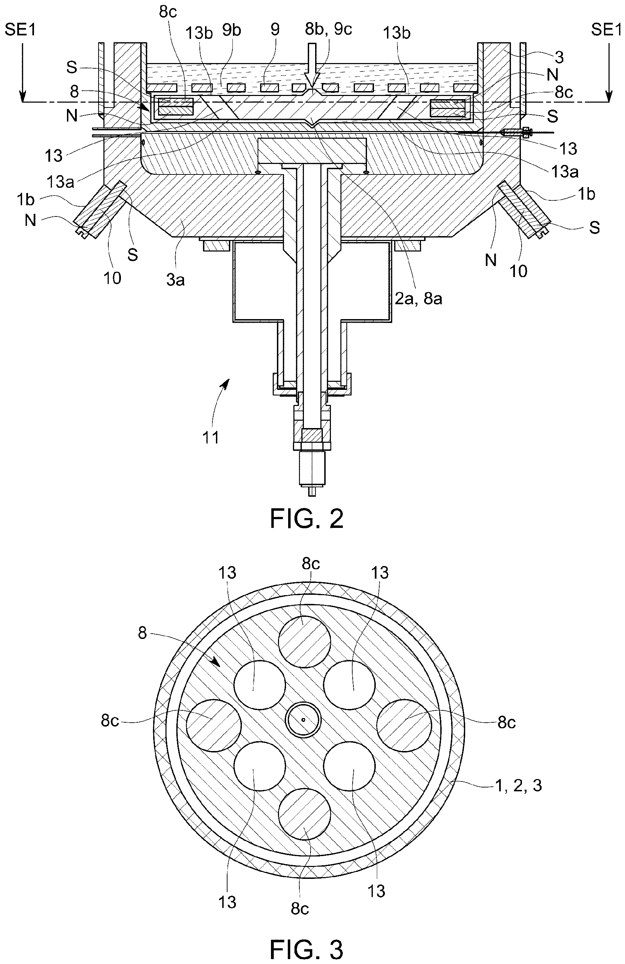

Wie insbesondere in Figur 2 erkennbar, kann der Elektromagnet 10 in einer in der Druckbehälterwandung vorgesehen und sich in Richtung der Magnetscheibe 8 erstreckenden Bohrung 1b vorgesehen sein. Es ist insbesondere erkennbar, dass die Bohrung 1b von außerhalb des Druckbehälters 1 zugänglich ist, um somit den Elektromagneten 10 einfach von außerhalb des Druckbehälters 1 in der Druckbehälterwandung vorzusehen. Bevorzugt ist, wenn der Elektromagnet 10 in die Bohrung 1b einschraubbar ist. Genauer gesagt, kann der Elektromagnet 10 wenigstens teilweise in Form einer Schraube ausgebildet sein, um in die dann mit einem Gewinde vorgesehene Bohrung 1b eingeschraubt zu werden. Durch Bewegung des Elektromagneten 10 in der Bohrung 1b, d.h. insbesondere durch die Schraubbewegung des Elektromagneten 10 in der Bohrung 1b, kann der Elektromagnet 10 in Richtung der Magnetscheibe 8 bewegt werden bzw. der Abstand zwischen Elektromagnet 10 und Magnetscheibe 8 kann variiert werden. Der Abstand zwischen Magnetscheibe 8 und Elektromagnet 10 kann somit insbesondere verringert werden, um somit die magnetische Wirkung des Elektromagneten 10 auf die Magnetscheibe 8 zu verstärken, sodass ein effektiverer Antrieb der Magnetscheibe 8 erzielt wird. In den Figuren 1 und 2 ist ferner erkennbar, dass die Bohrung 1b sich schräg zur Rotationsachse der Magnetscheibe 8 erstrecken kann. Es kann jedoch auch vorgesehen sein, dass die Bohrung 1b sich in einem anderen Winkel, insbesondere parallel zur Rotationsachse, erstreckt. Außerdem kann vorgesehen sein, dass mehrere der Bohrungen 1b vorgesehen sind, welche jeweils für eine der mehreren Elektromagneten 10 vorgesehen sind.

Die Erfindung ist dabei jedoch nicht auf eine derartige Anordnung des Elektromagneten 10 beschränkt. Eine weitere Ausführung zur Anordnung des Elektromagneten 10 bzw. der mehreren Elektromagneten 10 außerhalb der Reaktionskammer 2 ist in den Figuren 4 und 5 gezeigt.

In den Figuren 4 und 5 ist erkennbar, dass der wenigstens eine Elektromagnet 10 außerhalb der Reaktionskammer 2 vorgesehen sein kann, indem er außerhalb des Druckbehälters 1 vorgesehen ist. Wie beispielhaft gezeigt, kann dies erfolgen, indem eine den Druckbehälter 1 umgreifende Klammer 12 den wenigstens einen Elektromagneten 10 aufnimmt, um den wenigstens einen Elektromagneten 10 außerhalb der Reaktionskammer 2 bzw. des Druckbehälters 1 vorzusehen. Vorzugsweise nimmt die Klammer 12 mehrere Elektromagneten 10 auf, welche insbesondere über den Umfang der Klammer 12 (gleichmäßig) verteilt sein können. Die Klammer 12 weist vorzugsweise eine der Außenwand des Druckbehälters 1 korrespondierende, also vorzugsweise eine kreisrunde Form auf. Zur Aufnahme des wenigstens einen Elektromagneten 10 in der Klammer 12 kann eine Aussparung vorgesehen sein, in welche der Elektromagnet 10 vorgesehen, insbesondere eingesteckt werden kann.

Die Klammer 12 weist vorzugsweise zwei Klammerhälften 12a, 12b auf, welche zueinander bewegbar sind, um in Verbindung mit dem Druckbehälter 1 bzw. der Außenwand des Druckbehälters 1 gebracht werden kann. Das heißt, die Klammerhälften 12a, 12b sind vorzugsweise an einem ihrer Enden gelenkig miteinander verbunden und an dem anderen ihrer Enden bzw. über ihre freien Enden miteinander (wieder-)verbindbar bzw. befestigbar. Die freien Enden der Klammerhälften 12a, 12b können beispielsweise mit einem Befestigungsmittel 12c miteinander verbunden werden. Die Klammer 12 kann also den Druckbehälter 1 bzw. dessen Außenwand umgreifen, wobei durch Festziehen des Befestigungsmittels 12c die Klammer 12, insbesondere dessen nach Innen gerichtete Fläche, wenigstens in kraftschlüssigen Kontakt mit der Außenwand des Druckbehälters 1 kommt, um somit den wenigstens einen Elektromagneten 10 bzgl. der Magnetscheibe 8 zu halten. Das Befestigungsmittel 12c kann beispielsweise eine Schraube sein, die durch das freie Ende der einen Klammerhälfte 12b durchführbar ist und in der anderen Klammerhälfte 12a eingeschraubt wird, um somit die Klammerhälften 12a, 12b aufeinander zu zubewegen, so dass diese gegen die Außenwand des Druckbehälters 1 gedrückt werden.

Bevorzugt ist, wenn die Klammer 12 am Druckbehälter 1 derart vorgesehen ist, dass der darin aufgenommene Elektromagnet 10 auf Höhe der Magnetscheibe 8 liegt. Die Klammer 12 bewirkt insbesondere, dass der wenigstens eine Elektromagnet 10 in seiner Höhe bezüglich der Magnetscheibe 8 variabel vorgesehen werden kann. Mittels der Klammer 12 kann der Elektromagnet 10 insbesondere ohne bauliche Änderungen des Druckbehälters 1, insbesondere ohne bauliche Änderungen der Druckbehälterwandung, bezüglich der Magnetscheibe 8 vorgesehen werden.

Da die Magnetscheibe 8 sich in dem durch den Elektromagneten 10 bewirkten rotierenden Magnetfeld befindet, wird sich eine Drehzahl der Magnetscheibe 8 einstellen, welche der Drehzahl des durch den Elektromagneten 10 bewirkten Magnetfeldes entspricht. Die Magnetscheibe 8 ist hinsichtlich der Magnetisierung vorzugsweise entsprechend einem Rotor eines Synchron- oder Schrittmotors ausgebildet. Zur Magnetisierung der Magnetscheibe 8 kann die Magnetscheibe 8 einen Permanentmagneten und/oder einen fremderregten Magneten - also einen Magnet, der mit Stromzufuhr betrieben wird - aufweisen. Bevorzugt ist, wenn zur Magnetisierung der Magnetscheibe 8 wenigstens zwei, vorzugsweise drei, besonderes bevorzugt vier magnetische Elemente 8c vorgesehen sind. Wie in Figur 3 erkennbar, sind die magnetischen Elemente 8c vorzugsweise um die Rotationsachse der Magnetscheibe 8 gleichmäßig verteilt angeordnet. Der bezüglich der Rotationsachse der Magnetscheibe 8 gemessene Winkel zwischen zwei in Rotationsrichtung gesehen benachbarten magnetischen Elementen 8c kann 180° (bei insgesamt zwei magnetischen Elementen 8c), 120° (bei insgesamt drei magnetischen Elementen 8c) oder 90° (bei insgesamt vier magnetischen Elementen 8c) betragen. Die magnetischen Elemente 8c sind dabei vorzugsweise derart vorgesehen, dass - wie in Figur 2 beispielhaft dargestellt - ein magnetisches Element 8c zu den jeweils in Rotationsrichtung gesehen nächsten magnetischen Element 8c eine umgekehrte Polung aufweist. Die Nord-Süd bzw. Süd-Nord-Polung zeigt dabei vorzugsweise in Richtung des Elektromagneten 10.

Es kann insbesondere vorgesehen, dass das jeweilige magnetische Element 8c als Magnetsäule ausgebildet ist. Die Magnetsäule hat vorzugsweise eine zylindrische Form. Vorzugsweise weist die Magnetscheibe 8 eine der Magnetsäule entsprechende Aussparung bzw. Sacklochbohrung auf. Somit kann vorgesehen sein, dass die Magnetsäule in die Magnetscheibe 8 bzw. in die korrespondierend zu der Magnetsäule ausgebildete Aussparung einsetzbar bzw. einsteckbar ist, um somit beispielsweise ein einfaches Wechseln der magnetischen Elemente 8c zu bewirken. Die jeweilige Aussparung kann waagrecht (parallel), quer oder senkrecht zu der Rotationsachse der Magnetscheibe 8 vorgesehen sein. Somit können magnetische Elemente mit einer hohen Magnetdichte verwendet werden. Sind die Elektromagneten 10 unterhalb der Magnetscheibe 8 vorgesehen, also beispielsweise im Gehäuseunterteil 3 bzw. im Druckbehälterboden 3a, ist es von Vorteil, wenn die Aussparung parallel zur Rotationsachse vorgesehen ist. Somit wird eine hohe Feldstärke der magnetischen Elemente 8c nach unten bewirkt, sodass die Magnetscheibe 8 effektiver angetrieben werden kann. Alternativ oder zusätzlich können die magnetischen Elemente 8c auch in der Magnetscheibe 8 eingebettet/verkapselt, insbesondere eingeschweißt, eingeschmolzen und/oder eingeschlossen sein.

Die Magnetscheibe 8 ist nicht auf ein bestimmtes Material beschränkt, jedoch ist es bevorzugt, wenn die Magnetscheibe 8 aus einem keramischen Material wie beispielsweise Siliciumcarbid hergestellt ist. Da diese Materialen stark mikrowellenabsorbierend sind, kann somit die in der Flüssigkeit 5 vorgesehene Magnetscheibe 8 mittels Mikrowellenstrahlung erhitzt werden, sodass die Flüssigkeit 5 sich sowohl direkt über Mikrowellenabsorption als auch indirekt über Wärmeabgabe von der Magnetscheibe 8 erhitzt.

Wie insbesondere in den Figuren 1 und 2 erkennbar, weist die Magnetscheibe 8 wenigstens eine sich quer zur Rotationsachse der Magnetscheibe 8 erstreckende Durchgangsbohrung (Verwirbelungsbohrung) 13 auf. Die Durchgangsbohrung 13 weist an der Unter- und Oberseite des Magneten 8 jeweils eine Öffnung 13a bzw. 13b auf, wobei die Öffnung 13a vorzugsweise dem Boden der Reaktionskammer 2 gegenüberliegt, und wobei die Öffnung 13b vorzugsweise der Platte 2 gegenüberliegt. Die Durchgangsbohrung 13 ist vorzugsweise derart vorgesehen, dass diese die Magnetscheibe 8 in eine Richtung nach oben und von der Rotationsachse der Magnetscheibe 8 weg durchläuft, also die Öffnung 13b von der Rotationsachse weiter entfernt ist als die Öffnung 13a. Das heißt, die Durchgangsbohrung 13 durchläuft die Magnetscheibe 8 vorzugsweise in eine Richtung radial zur Drehrichtung der Rotationsachse. Besonders bevorzugt ist, wenn die jeweilige Durchgangsbohrung 13 durchgängig gerade ausgebildet ist und ihre Längsachse quer zur Rotationsachse der Magnetscheibe 8 vorgesehen ist. Die jeweilige Durchgangsbohrung 8 ist also in einem Winkel zur Rotationsachse der Magnetscheibe 8 vorgesehen, welcher vorzugsweise in einem Bereich von 10 bis 80 Grad liegt und besonders bevorzugt 45 Grad +/- 5 bis 10 Grad beträgt.

Die Durchgangsbohrung 13 ist derart vorgesehen, dass die in der Reaktionskammer 2 aufgenommene Flüssigkeit 5 durch Rotation der Magnetscheibe 8 durch die Durchgangsöffnung 13 getrieben wird, um die Flüssigkeit 5 zu rühren. Mittels des Rühreffekts wird die Flüssigkeit 5 in eine Richtung nach oben und außen gedrängt und steigt folglich an der Innenwandung der Reaktionskammer 2 auf. Folglich wird im Schnitt gesehen ein im Wesentlichen U-förmiger Flüssigkeitsspiegel gebildet. Die Flüssigkeit 5 wird also von einer Seite der Magnetscheibe 8, beispielsweise von deren Unterseite, zu einer anderen Seite der Magnetscheibe 8, beispielsweise zu deren Oberseite, getrieben, um somit die Flüssigkeit 5 für die Rührung zirkulieren zu lassen. Die Flüssigkeit 5 zirkuliert in der Reaktionskammer 2, indem sie durch den Spalt zwischen Magnetscheibe 8 und Platte 9, durch den Spalt zwischen Magnetscheibe 8 und Boden der Reaktionskammer 2, durch den Spalt zwischen Magnetscheibe 8 und der Innenwand der Reaktionskammer 2, und/oder durch die Durchgangsöffnung 8 strömt. Die Durchgangsbohrung 8 bewirkt also eine Rührung bzw. Verwirbelung der Flüssigkeit 5, wodurch sich die Flüssigkeit 5 schneller und gleichmäßiger erwärmt und die Probe P somit effizienter erhitzt wird.

Zur Verstärkung des vorgenannten Rühreffekts ist es bevorzugt, wenn die Magnetscheibe 8 mehrere, also wenigstens zwei, vorzugsweise drei, besonders bevorzugt vier Durchgangsbohrungen 13 aufweist, welche - wie in Figur 3 erkennbar - vorzugsweise um die Rotationsachse der Magnetscheibe 8 gleichmäßig verteilt sind. Bezüglich der magnetischen Elemente 8 ist die wenigstens eine Durchgangsbohrung 13 in Draufsicht bzw. Schnittansicht gesehen vorzugsweise zwischen zwei magnetischen Elementen 8c vorgesehen. Genauer gesagt können die magnetischen Elemente 8c auf einem ersten Kreis um die Rotationsachse der Magnetscheibe angeordnet sein, und die wenigstens eine Durchgangsbohrung 13 auf einem zweiten Kreis um die Rotationsachse angeordnet sein, wobei der Radius des zweiten Kreises vorzugsweise kleiner ist als der Radius des ersten Kreises. Die Durchgangsbohrung 13 bzw. eine Öffnung der Durchgangsbohrung 13 überlappt dabei in Draufsicht gesehen mit dem ersten Kreis an einer Stelle, an der kein magnetisches Element 8c vorgesehen ist, sodass das jeweilige magnetische Element 8c nicht beeinflusst wird.

Die Durchgangsbohrung 13 kann zudem derart ausgestaltet sein, dass die Flüssigkeit 5 durch die Durchgangsbohrung 13 getrieben wird und abhängig von der Drehrichtung der Magnetscheibe 8 um ihre Rotationsachse die Durchflussrichtung des Flüssigkeit 5 durch die Durchgangsbohrung 13 geändert wird. Wird also die Magnetscheibe 8 in die eine Richtung (also beispielsweise im Uhrzeigersinn) gedreht, wird die Flüssigkeit 5 durch die Durchgangsbohrung 8 in eine Richtung von unten nach oben getrieben, wobei bei Drehung der Magnetscheibe 8 in die andere Richtung (also beispielsweise entgegen dem Uhrzeigersinn) die Flüssigkeit 5 durch die Durchgangsbohrung 13 in eine Richtung von oben nach unten getrieben wird. Das heißt, der Vektor der Erstreckung der Durchgangsbohrung 13 durch die Magnetscheibe 8 kann eine zur Rotationsrichtung der Magnetscheibe tangentiale Komponente aufweisen, d.h. die Durchgangsbohrung 13 kann zur Rotationsachse der Magnetscheibe 8 beispielsweise windschief vorgesehen sein. Durch die tangentiale Komponente kann dann die Flüssigkeit wegen des Drehmoments der Magnetscheibe 8 durch die Durchgangsbohrung getrieben werden, und je nach Drehrichtung der Magnetscheibe 8 kann die Durchflussrichtung der Flüssigkeit 5 durch die Durchgangsbohrung 13 eingestellt werden.

Wie in den Figuren 1 und 3 erkennbar, kann der jeweilige Probenbehälter 6 einen Rührmagneten 14 zum Rühren einer in dem Probenbehälter 6 aufgenommenen Probe P aufweisen. Der Rührmagnet 14 ist vorzugsweise ein Permanentmagnet mit Nord-Südpolung. Der Rührmagnet 14 hat vorzugsweise eine längliche Form, um somit über seine Länge die Probe P zu rühren. Der Rührmagnet 14 kann ausgebildet sein, um schräg in dem Probenbehälter 6 zu liegen. Der Rührmagnet 14 ist vorzugsweise als Rührfischchen ausgebildet. Der Rührmagnet 14 kann im Allgemeinen jedoch jede Form aufweisen, welche geeignet ist, um die Probe P zu rühren, also beispielsweise auch eine Propellerform oder dergleichen.

Der Rührmagnet 14 ist bezüglich der Magnetscheibe 8 derart vorgesehen, dass der Rührmagnet 14 durch das rotierende Magnetfeld des Elektromagneten 10 und/oder der Magnetscheibe 8 in Bewegung versetzt wird. Hierfür ist es besonders von Vorteil, wenn der Rührmagnet 14 in einem (unteren) Teil des Probenbehälters 6 vorgesehen, welcher unmittelbar gegenüber der Magnetscheibe 8 und/oder der Platte 9 vorgesehen ist, sodass das Magnetfeld der Magnetscheibe 8 gut auf den Rührmagneten 14 wirkt. Das jeweilige Magnetfeld der Magnetscheibe 8 und/oder des Elektromagneten 10 bewegt sich also relativ zum Probenbehälter 6, wodurch der Rührmagnet 14 in eine Bewegung bzw. Drehung versetzt wird, welche der Drehung des jeweiligen Magnetfelds bzw. der Magnetfelder entspricht. Durch diese Bewegung wird die Probe P folglich mittels des Rührmagneten 14 gerührt, wodurch insbesondere Proben mit hoher Viskosität bzw. vielen Feststoffanteilen effizient homogenisiert werden können.

Der Druckbehälter 1 kann zum Erwärmen bzw. Beheizen, insbesondere der Flüssigkeit 5, der Platte 9 und/oder der Proben P, jegliche Mittel zur direkten oder indirekten Abgabe von Wärme aufweisen. Bevorzugt ist, wenn der Druckbehälter 1 einen nicht näher dargestellten Mikrowellengenerator aufweist, welcher über den Mikrowelleneinkopplungsbereich 11 Mikrowellen in die Reaktionskammer 2 einkoppelt. Die generierten Mikrowellen gelangen in die Reaktionskammer 2 dabei vorzugsweise über das Magnetfeld der Magnetscheibe 8 und/oder des Elektromagneten 10, sodass das Magnetfeld mit den eingekoppelten Mikrowellen wechselwirken, um beispielsweise eine vorteilhafte Lenkung der Mikrowellen zu bewirken.

Anstelle des wie oben beschriebenen Elektromagneten 10 kann gemäß einem nicht näher dargestellten Ausführungsbeispiel die Magnetanordnung auch einen wie folgt beschriebenen drehbar vorgesehenen Permanentmagneten aufweisen, sodass durch die Drehung bzw. Rotation des Permanentmagneten das sich rotierend Magnetfeld zum rotatorischen Antrieb der Magnetscheibe erzeugt wird. Die obigen Ausführungen bzgl. des Elektromagneten 10 gelten für eine solche Magnetanordnung analog, falls im Folgenden nicht anders beschrieben.

Die Magnetanordnung kann eine Permanentmagnetenaufnahme aufweisen, in welcher der wenigstens eine Permanentmagnet zum Drehen des wenigstens einen Permanentmagneten aufgenommen ist. Die Permanentmagnetenaufnahme umgibt vorzugsweise (teilweise) die Reaktionskammer, besonders bevorzugt den Druckbehälter. Die Permanentmagnetenaufnahme kann eine der Reaktionskammer und/oder dem Druckbehälter entsprechende Form aufweisen, beispielsweise einen ringförmigen Querschnitt bzw. ist sie als Ring ausgebildet. Die Permanentmagnetenaufnahme nimmt vorzugsweise mehrere, insbesondere zwei Permanentmagnete auf. Je Permanentmagnet kann die Permentmagnetenaufnahme eine dem jeweiligen Permanentmagneten entsprechende Aufnahme aufweisen, in welche der jeweilige Permanentmagnet einsetzbar oder einsteckbar ist. Alternativ kann auch vorgesehen sein, dass der wenigstens eine Permanentmagnet in der Permanentmagnetenaufnahme eingebettet ist.

Weist die Magnetanordnung bzw. die Permanentmagnetenaufnahme mehrere Permanentmagneten auf, so sind diese vorzugsweise über den Umfang der Permanentmagnetenaufnahme gleichmäßig verteilt angeordnet. Die Anordnung der Permanentmagneten ist bevorzugt derart, dass die Polung der Permanentmagneten sich abwechselt, also abwechselnd positiv und negativ geladene Permanentmagnete entlang des Umfangs vorgesehen sind. Beispielsweise kann der Querschnitt der Permanentmagnetenaufnahme in (Kreis-)Sektoren aufgeteilt sein, wobei die Sektoren abwechselnd wenigstens einen oder eine Gruppe von Permanentmagneten mit einer positiven Polung (vorzugsweise 6 bis 8 Stück) und wenigstens einen oder eine Gruppe von Permanentmagneten mit einer negativen Polung (vorzugsweise 6 bis 8 Stück) aufweisen. Für eine besonders hohe Feldstärke des Magnetfelds kann vorgesehen sein, dass zwei bevorzugt einander direkt gegenüberliegende Kreissektoren vorgesehen sind, jeweils mit einem Kreiswinkel im Bereich von 120° bis 180°, vorzugsweise im Bereich von 160° bis 180°, wobei ein erster Kreissektor wenigsten einen oder mehrere (bspw. die vorbezeichneten 6 bis 8 Stück) Permanentmagnete mit einer positiven Polung aufweist, und wobei ein zweiter Kreissektor wenigstens einen oder mehrere (bspw. die vorbezeichneten 6 bis 8 Stück) Permanentmagnete mit einer negativen Polung aufweist. Bevorzugt ist, wenn die jeweiligen Permanentmagnete je Kreissektor über den jeweiligen (Kreis-)Sektor gleichmäßig verteilt angeordnet sind, sodass eine besonders hohe und gleichmäßige Feldstärke des Magnetfelds erzielt wird.

Die Permanentmagnetenaufnahme kann aus jeglichem Material bestehen, welches geeignet ist, den wenigstens einen Permanentmagneten aufzunehmen. Bevorzugte Materialien sind Polypropylen (PP), Aluminium (Al) und/oder Kunststoffe im Allgemeinen, da mit diesen Materialien ein besonders geringes Gewicht erzielt werden kann.

Die Magnetanordnung kann ferner einen Antrieb zum Antreiben des wenigstens einen Permanentmagneten bzw. der Permanentmagnetenaufnahme aufweisen, sodass sich der Permanentmagnet bzw. die Permanentmagnetenaufnahme dreht/rotiert, um das sich rotierende Magnetfeld zu erzeugen. Bevorzugt ist, wenn der Antrieb die Permanentmagnetenaufnahme dreht, um den Permanentmagnet wie zuvor beschrieben zu drehen/rotieren. Hierfür kann vorgesehen sein, dass ein entsprechendes Übersetzungsmittel (Zahnrad, Getriebe etc.) zwischen Antrieb und Permanentmagnetenaufnahme vorgesehen ist, um die Antriebskraft des Antriebs auf die Permanentmagnetenaufnahme und somit den Permanentmagneten zu übertragen.

Die Erfindung ist dabei nicht auf die zuvor beschriebenen Merkmale beschränkt. Insbesondere lassen sich alle zuvor beschriebenen Merkmale in beliebiger Weise miteinander kombinieren.

## Patentansprüche

1. Druckbehälter (1) zur Aufnahme von zu beheizenden Proben (P), aufweisend
eine Reaktionskammer (2) als Druckraum zum Auslösen und/oder Fördern chemischer und/oder physikalischer Druckreaktionen, wobei die Reaktionskammer (2) zur Aufnahme einer Flüssigkeit (5) ausgebildet ist,
eine um eine Rotationsachse drehbar in der Reaktionskammer (2) gelagerte Magnetscheibe (8), und
eine außerhalb der Reaktionskammer (2) vorgesehene Magnetanordnung (10) zur Erzeugung eines sich rotierenden Magnetfeldes zum rotatorischen Antrieb der Magnetscheibe (8) um ihre Rotationsachse,
wobei die Magnetscheibe (8) wenigstens eine sich quer zur Rotationsachse erstreckende Durchgangsbohrung (13) aufweist, welche derart vorgesehen ist, dass in der Reaktionskammer (2) aufgenommene Flüssigkeit (5) durch Rotation der Magnetscheibe (8) durch die Durchgangsöffnung (13) getrieben wird, um die Flüssigkeit (5) zu rühren.

2. Druckbehälter (1) nach Anspruch 1, wobei die wenigstens eine Durchgangsbohrung (13) die Magnetscheibe (8) wenigstens zum Teil in eine Richtung nach oben und von der Rotationsachse weg oder zur Rotationsachse hin durchläuft.

3. Druckbehälter (1) nach Anspruch 1 oder 2, wobei die wenigstens eine Durchgangsbohrung (13) die Magnetscheibe (8) wenigstens zum Teil in eine Richtung tangential zur oder entgegen der Drehrichtung um die Rotationsachse geneigt durchläuft.

4. Druckbehälter (1) nach einem der vorhergehenden Ansprüche, wobei die wenigstens eine Durchgangsbohrung (13) die Magnetscheibe (8) wenigstens zum Teil in eine Richtung radial zur Rotationsachse hin oder von der Rotationsachse weg geneigt durchläuft.

5. Druckbehälter (1) nach einem der vorhergehenden Ansprüche, wobei die Magnetscheibe (8) wenigstens zwei, vorzugsweise drei, besonders bevorzugt vier Durchgangsbohrungen (13) aufweist, welche vorzugsweise um die Rotationsachse der Magnetscheibe (8) gleichmäßig verteilt sind.

6. Druckbehälter (1) nach einem der vorhergehenden Ansprüche, ferner aufweisend eine Platte (9), welche in der Reaktionskammer (2) vorgesehen und für die Flüssigkeit (5) beispielsweise über Löcher (9b) durchlässig ist, wobei die Platte (9) mit der Reaktionskammer (2) einen Raum definiert, in welchem die Magnetscheibe (8) gelagert ist,
wobei die Platte (9) vorzugsweise aus einem keramischen Material hergestellt ist, welches vorzugsweise Siliciumcarbid aufweist oder ist.

7. Druckbehälter (1) nach einem der vorhergehenden Ansprüche, wobei die Reaktionskammer (2) und/oder die Platte (9) einen Bereich (2a, 9c) zur Lagerung der Magnetscheibe (8) aufweist.

8. Druckbehälter (1) nach einem der vorhergehenden Ansprüche, ferner aufweisend wenigstens einen Probenbehälter (6) zur Aufnahme der Probe (P), wobei der Probenbehälter (6) in der Reaktionskammer (2) gehalten wird, um von der in der Reaktionskammer (2) aufgenommenen Flüssigkeit (5) erwärmt zu werden, wenn die Flüssigkeit (5) in der Reaktionskammer (2) aufgenommen ist.

9. Druckbehälter (1) nach Anspruch 8, wobei der wenigstens eine Probenbehälter (6) einen Rührmagneten (14) zum Rühren einer in dem Probenbehälter (6) aufgenommenen Probe (P) aufweist, und wobei der Rührmagnet (14) bezüglich der Magnetscheibe (8) derart vorgesehen ist, dass durch das rotierende Magnetfeld und/oder durch das wegen Rotation der Magnetscheibe (8) sich ergebende rotierende Magnetfeld der Rührmagnet (14) zum Rühren der Probe (P) in Bewegung versetzt wird.

10. Druckbehälter (1) nach Anspruch 8 oder 9, wobei der wenigstens eine Probenbehälter (6) über eine Probenhalterung (7) in der Reaktionskammer (2) gehalten wird, wobei die Probenhalterung (7) vorzugsweise auf einem Bereich (9d) der Platte (9) zur Lagerung der Probenhalterung (7) gelagert ist.

11. Druckbehälter (1) nach einem der vorhergehenden Ansprüche, wobei die Magnetanordnung einen oder mehrere, vorzugsweise über den Umfang bevorzugt gleichmäßig verteilt angeordnete Elektromagnete (10), vorzugsweise Magnetspulen, aufweist,
wobei der Elektromagnet (10) vorzugsweise unterhalb, schräg unterhalb oder seitlich der Magnetscheibe (8), besonders vorzugsweise im, am oder nahe dem Druckbehälterboden (3a), vorgesehen ist, und/oder wobei der Elektromagnet (10) vorzugsweise in einer in der Druckbehälterwandung vorgesehenen und sich in Richtung der Magnetscheibe (8) erstreckenden Bohrung (1b) vorgesehen ist, wobei der Elektromagnet (10) besonders vorzugsweise in die Bohrung (1b) einschraubbar ist.

12. Druckbehälter (1) nach einem der vorhergehenden Ansprüche, wobei die Magnetanordnung wenigstens einen drehbar, insbesondere um die Magnetscheibe (8) herum drehbar vorgesehenen Permanentmagneten aufweist, sodass durch die Drehung des Permanentmagneten das sich rotierende Magnetfeld zum rotatorischen Antrieb der Magnetscheibe (8) erzeugt wird.

13. Druckbehälter (1) nach Anspruch 12, wobei die Magnetanordnung aufweist:
• eine Permanentmagnetenaufnahme vorzugsweise in Form eines Ringes, in welcher der wenigstens eine Permanentmagnet zum Drehen bzw. Rotieren des wenigstens einen Permanentmagneten aufgenommen ist, wobei die Permanentmagnetenaufnahme vorzugsweise mehrere Permanentmagneten aufnimmt, welche bevorzugt über den Umfang der Permanentmagnetenaufnahme gleichmäßig verteilt angeordnet sind, besonders bevorzugt je Pol einander gegenüberliegend und über einen Winkel von jeweils 120-180°, bevorzugt 160-180° verteilt, und/oder
• einen Antrieb zum Antreiben des wenigstens einen Permanentmagneten oder der Permanentmagnetenaufnahme, sodass sich der oder die Permanentmagnete derart rotieren, um das sich rotierende Magnetfeld zu erzeugen.

14. Druckbehälter (1) nach einem der vorhergehenden Ansprüche, wobei die Magnetscheibe (8) wenigstens zwei, vorzugsweise drei, besonders bevorzugt vier magnetische Elemente (8c) zur Magnetisierung der Magnetscheibe (8) aufweist, welche vorzugsweise um die Rotationsachse der Magnetscheibe (8) gleichmäßig verteilt sind,
wobei ferner vorzugsweise in Draufsicht der Magnetscheibe (8) gesehen zwischen zwei magnetischen Elementen (8c) eine der wenigstens einen Durchgangsbohrung (13) vorgesehen ist, und
wobei ferner vorzugsweise die wenigstens zwei magnetischen Elemente (8c) jeweils eine Magnetsäule sind.

15. Druckbehälter (1) nach einem der vorhergehenden Ansprüche, ferner aufweisend einen Mikrowellengenerator, welcher derart vorgesehen ist, dass vom Mikrowellengenerator generierte Mikrowellen wenigstens über das von der Magnetanordnung (10) erzeugte Magnetfeld in die Reaktionskammer (2) eingekoppelt werden.
